# EUROPEAN PATENT SPECIFICATION

(11) **EP 4 254 877 B1**
(45) Date of publication and mention of the grant of the patent: **09.07.2025**
(21) Application number: 21920869.1
(22) Date of filing: 29.12.2021
(51) Int. Cl.: H04L 12/18

(54) **NETWORK CONFERENCE CONVERGENCE SYSTEM AND METHOD**
NETZWERKKONFERENZKONVERGENZSYSTEM UND -VERFAHREN
SYSTÈME ET PROCÉDÉ DE CONVERGENCE DE CONFÉRENCES EN RÉSEAU

(30) Priority: 21.01.2021 CN 202110080878
(43) Date of publication of application: 04.10.2023
(73) Proprietor: BEIJING BYTEDANCE NETWORK TECHNOLOGY CO., LTD., Beijing 100041 (CN)
(72) Inventor: YANG, Zhiye, Beijing 100190 (CN)
(74) Representative: Dentons UK and Middle East LLP
(86) International application number: PCT/CN2021/142370
(87) International publication number: WO 2022/156498

(56) References cited:
- EP-A1- 2 590 376
- CN-A- 104 301 126
- CN-A- 105 357 223
- CN-A- 111 131 252
- CN-A- 111 131 641
- CN-A- 112 929 595
- CN-B- 103 201 981
- US-A1- 2016 294 888
- US-A1- 2017 374 114

## Description

### TECHNICAL FIELD

The present disclosure relates to the field of conference convergence technologies, for example, a network conference convergence system and method.

### BACKGROUND

Many brands of network-based video conference software exist, merchants of different brands have their own independent video conference software and service systems, and video conference software of different brands generally cannot interoperate. In practical use, many enterprises use the video conference software of different brands. When a conference is held, the video conference software of different brands cannot interoperate with each other. Therefore, a counterpart's software can only be downloaded, or a telephone conference is held, which brings a lot of inconvenience. Therefore, a video conference between different conference products has become a communication obstacle and has two major problems: the video conference software is independent of each other, and the different video conference software cannot interconnect and interoperate; and when users using the different video conference software hold a conference with each other, the users cannot quickly access each other's video conference software and can only download the counterpart's software, which causes inconvenience to the users. US2016294888A1 introduces about a cloud-based conferencing system.

### SUMMARY

The present disclosure provides a network conference convergence system and method, which can implement the interconnection and interoperation between different conference software. Thus, when users using different video conference software hold a conference with each other, the users quickly access each other's video conference software so that the convenience of a network conference is improved for the users. The invention is set out in the appended set of claims.

### BRIEF DESCRIPTION OF DRAWINGS

FIG. 1 is a structural diagram of a network conference convergence system according to an embodiment of the present disclosure;
FIG. 2 is a structural diagram of another network conference convergence system according to an embodiment of the present disclosure;
FIG. 3 is a structural diagram of another network conference convergence system according to an embodiment of the present disclosure;
FIG. 4 is a structural diagram of another network conference convergence system according to an embodiment of the present disclosure;
FIG. 5 is a flowchart of a network conference convergence method according to an embodiment of the present disclosure;
FIG. 6 is a flowchart of another network conference convergence method according to an embodiment of the present disclosure; and
FIG. 7 is a schematic diagram showing a data interaction process of a first virtual conference and a second virtual conference according to an embodiment of the present disclosure.

### DETAILED DESCRIPTION

Embodiments of the present disclosure are described hereinafter with reference to the drawings. The drawings illustrate some embodiments of the present disclosure, but the present disclosure may be implemented in various manners and should not be construed as limited to the embodiments set forth herein. These embodiments are provided for ease of understanding of the present disclosure. The drawings and embodiments of the present disclosure are illustrative. Steps described in method embodiments of the present disclosure may be performed in sequence and/or in parallel. Additionally, the method embodiments may include additional steps and/or omit some of the illustrated steps. The scope of the present disclosure is not limited in this respect. The term "include" and variations thereof used herein refer to "including, but not limited to". The term "based on" refers to "at least partially based on". The term "an embodiment" refers to "at least one embodiment". The term "another embodiment" refers to "at least one another embodiment". The term "some embodiments" refers to "at least some embodiments". Definitions of other terms are given in the description hereinafter.

Concepts such as "first" and "second" in the present disclosure are used to distinguish between apparatuses, between modules, or between units and are not intended to limit the order or mutual dependence of the functions performed by these apparatuses, modules, or units.

Modifications "one" and "multiple" mentioned in the present disclosure are illustrative instead of restrictive and should be construed as "one or more" by those skilled in the art, unless otherwise indicated in the context.

The names of messages or information exchanged between apparatuses in the implementations of the present disclosure are only used for illustrative purposes and are not intended to limit the scope of the messages or information.

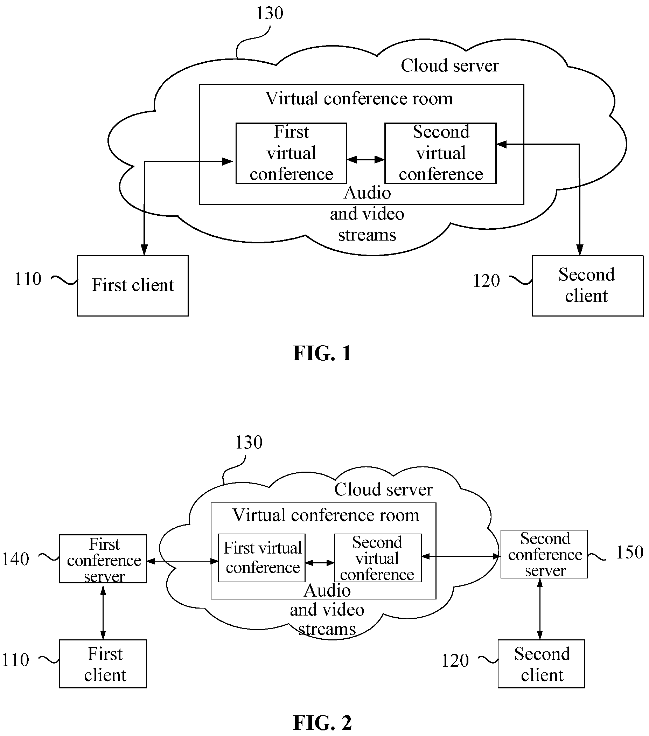

FIG. 1 is a structural diagram of a network conference convergence system according to an embodiment of the present disclosure. As shown in FIG. 1, the system includes a first client 110, a second client 120, and a cloud server 130.

The first client 110 is installed with a first conference application and a cloud conference application. The second client 120 is installed with a second conference application and the cloud conference application. The cloud server 130 is installed with the first conference application and the second conference application.

The first client 110 creates or enters a first virtual conference through the first conference application. The first client 110 sends a first join request to the cloud server 130 through the cloud conference application. The cloud server 130 joins the first virtual conference through the first conference application according to the first join request.

The second client 120 creates or enters a second virtual conference through the second conference application. The second client 120 sends a second join request to the cloud server 130 through the cloud conference application. The cloud server 130 joins the second virtual conference through the second conference application according to the second join request.

The cloud server 130 receives a conference room creation request sent by the first client 110 or the second client 120, creates a virtual conference room according to the conference room creation request, and adds the first virtual conference and the second virtual conference to the virtual conference room. The first client 110 and the second client 120 transmit data through the virtual conference room.

The first conference application and the second conference application may be understood as applications developed by different developers to implement network conferences. Multiple first clients 110 and multiple second clients 120 may exist. In this embodiment, conference applications are not limited to two kinds of conference applications developed by the developers. Multiple conference applications may be included, or a conference application may be understood as any conference application which may be suitable for appearing on the market currently. For example, the system may further include a third client and a fourth client, where the third client is installed with a third conference application, and the fourth client is installed with a fourth conference application.

The cloud conference application may be implemented through any one of a web page, a software plug-in, a script, or an application. Authentication may be implemented by the cloud conference application through a login or the like.

The first join request may be a first conference number, and the second join request may be a second conference number. After creating or entering the first virtual conference through the first conference application, the first client 110 sends the first conference number to the cloud server 130 through the cloud conference application, and the cloud server 130 joins the first virtual conference through the first conference application according to the first conference number. After creating or entering the second virtual conference through the second conference application, the second client 120 sends the second conference number to the cloud server 130 through the cloud conference application, and the cloud server 130 joins the second virtual conference through the second conference application according to the second conference number.

The first client 110 or the second client 120 may send the conference room creation request to the cloud server 130. The cloud server 130 creates the virtual conference room according to the conference room creation request and adds the first virtual conference and the second virtual conference to the virtual conference room.

In this embodiment, the process in which the first client 110 and the second client 120 transmit the data through the virtual conference room may be as follows: the first client 110 sends a first video stream and a first audio stream which are acquired to the first virtual conference of the cloud server 130; the first video stream and the first audio stream are forwarded by the first virtual conference to the second virtual conference; and the first video stream and the first audio stream are sent by the second virtual conference to the second client 120. The second client 120 sends a second video stream and a second audio stream which are acquired to the second virtual conference of the cloud server 130, the second video stream and the second audio stream are forwarded by the second virtual conference to the first virtual conference, and the second video stream and the second audio stream are sent by the first virtual conference to the first client 110. The first virtual conference sends the first video stream to the second virtual conference through a virtual camera channel and forwards the first audio stream to the second virtual conference through a virtual microphone channel. The second virtual conference sends the second video stream to the first virtual conference through the virtual camera channel and forwards the second audio stream to the first virtual conference through the virtual microphone channel.

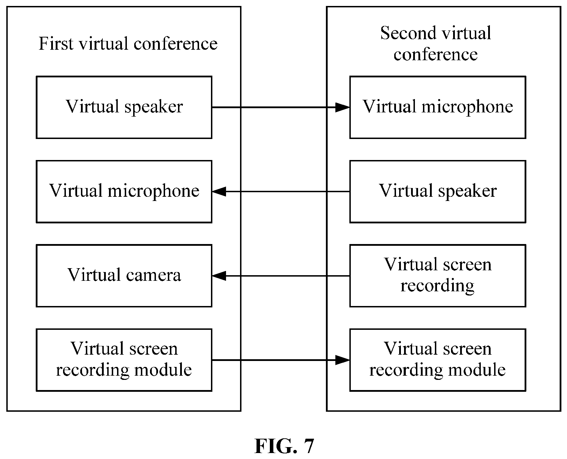

For example, FIG. 7 is a schematic diagram showing a data interaction process of a first virtual conference and a second virtual conference according to an embodiment of the present disclosure. As shown in FIG. 7, a virtual speaker, a virtual microphone, a virtual camera, and a virtual screen recording module are established by the first virtual conference; and a virtual speaker, a virtual microphone, a virtual camera, and a virtual screen recording module are established by the second virtual conference. The first video stream and the first audio stream are used as examples. When the first virtual conference in the cloud server receives the first video stream and the first audio stream, the first audio stream is sent to the virtual microphone of the second virtual conference through the virtual speaker, and the first video stream is virtually played by the virtual screen recording module such that the virtual camera of the second virtual conference acquires the first video stream.

Optionally, as shown in FIG. 2, the system further includes a first conference server 140 and a second conference server 150.

The first client 110 sends the first video stream and the first audio stream which are acquired to the first virtual conference of the cloud server 130 through the first conference server 140; and the second video stream and the second audio stream are sent by the first virtual conference to the first client 110 through the first conference server 140.

The second client 120 sends the second video stream and the second audio stream which are acquired to the second virtual conference of the cloud server 130 through the second conference server 150; and the first video stream and the first audio stream are sent by the second virtual conference to the second client 120 through the second conference server 150.

If the multiple first clients 110 exist, the first conference server 140 distributes the second video stream and the second audio stream to the multiple first clients 110. Similarly, if the multiple second clients 120 exist, the second conference server 150 distributes the first video stream and the first audio stream to the multiple second clients 120.

In this embodiment, for a client installed with the first conference application, the first virtual conference may be joined by the client through the first conference application. For a client installed with the second conference application, the second virtual conference may be joined by the client through the second conference application.

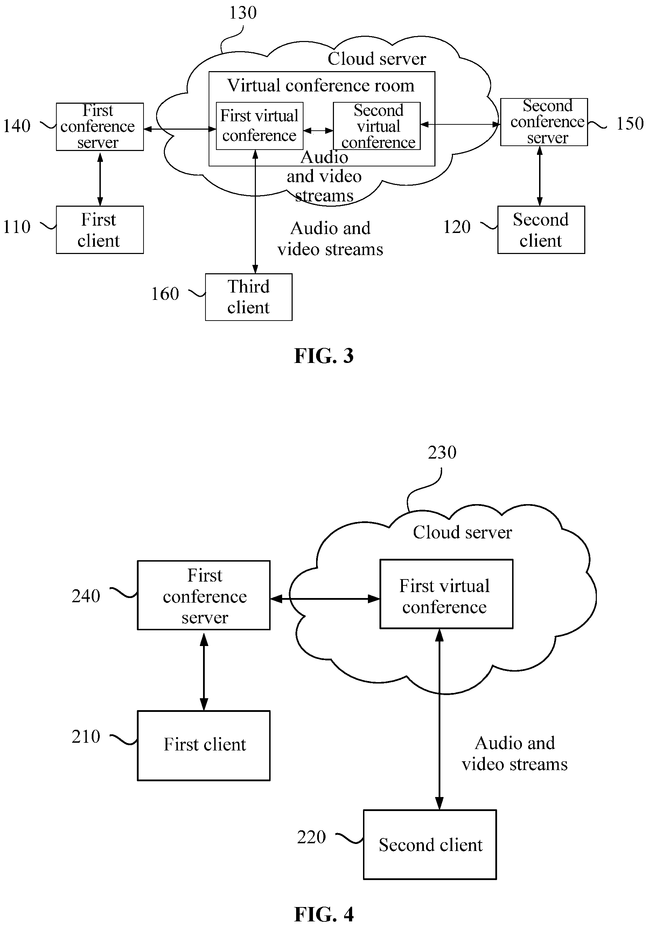

Optionally, as shown in FIG. 3, the system further includes a third client 160 installed with the cloud conference application. The third client 160 joins the first virtual conference or the second virtual conference through the cloud conference application. The first client 110, the second client 120, and the third client 160 transmit the data through the virtual conference room. In this solution, only one cloud conference application needs to be installed on the third client 160 such that the third client 160 can establish conference interoperation with a client on which another conference application is installed.

Multiple third clients 160 may exist. In this embodiment, if the third client 160 joins the first virtual conference, the process in which the first client 110, the second client 120, and the third client 160 transmit the data through the virtual conference room may be as follows: the third client 160 may send a third video stream and a third audio stream which are acquired to the first virtual conference in the cloud server 130. The third video stream and the third audio stream are sent by the first virtual conference to the first client 110 through the first conference server 140. The third video stream and the third audio stream are forwarded by the first virtual conference to the second virtual conference, and the third video stream and the third audio stream are sent by the second virtual conference to the second client 120 through the second conference server 150.

For the first video stream and the first audio stream from the first client 110, the first video stream and the first audio stream are directly sent by the first virtual conference to the third client 160. For the second video stream and the second audio stream from the second client 120, the second video stream and the second audio stream are directly sent by the first virtual conference to the third client 160.

If the third client joins the second virtual conference, the process in which the first client 110, the second client 120, and the third client 160 transmit the data through the virtual conference room is similar to that described above, and the details are not repeated here.

The network conference convergence system provided in the embodiment of the present disclosure includes the first client, the second client, and the cloud server. The first client is installed with the first conference application and the cloud conference application, the second client is installed with the second conference application and the cloud conference application, and the cloud server is installed with the first conference application and the second conference application. The first client creates or enters the first virtual conference through the first conference application, the first client sends the first join request to the cloud server through the cloud conference application, and the cloud server joins the first virtual conference through the first conference application according to the first join request. The second client creates or enters the second virtual conference through the second conference application, the second client sends the second join request to the cloud server through the cloud conference application, and the cloud server joins the second virtual conference through the second conference application according to the second join request. The cloud server receives the conference room creation request sent by the first client or the second client, creates the virtual conference room according to the conference room creation request, and adds the first virtual conference and the second virtual conference to the virtual conference room. The first client and the second client transmit the data through the virtual conference room. In the network conference convergence system provided in the embodiment of the present disclosure, the virtual conference room is created on the cloud server, and the first virtual conference and the second virtual conference are added to the virtual conference room so that the data transmission between the first client and the second client is implemented, which can implement the interconnection and interoperation between different conference software. Thus, when users using different video conference software hold a conference with each other, the users quickly access each other's video conference software so that the convenience of a network conference is improved for the users.

FIG. 4 is a structural diagram of another network conference convergence system according to an embodiment of the present disclosure. As shown in FIG. 4, the system includes a first client 210, a second client 220, and a cloud server 230.

The first client 210 is installed with a first conference application and a cloud conference application. The second client 220 is installed with the cloud conference application. The cloud server 230 is installed with the first conference application.

The first client 210 creates or enters a first virtual conference through the first conference application; and the first client 210 sends a first join request to the cloud server 230 through the cloud conference application. The cloud server 230 joins the first virtual conference through the first conference application according to the first join request.

The second client 220 joins the first virtual conference through the cloud conference application. The first client 210 and the second client 220 transmit data through the cloud server.

Multiple first clients 210 and multiple second clients 220 may exist. In this embodiment, the process in which the first client 210 and the second client 220 transmit the data through the cloud server may be as follows: the first client 210 sends a first video stream and a first audio stream which are acquired to the cloud server 230, and the cloud server 230 sends the first video stream and the first audio stream to the second client 22. The second client 220 sends a second video stream and a second audio stream which are acquired to the cloud server, and the cloud server 230 sends the second video stream and the second audio stream to the first client 210.

Optionally, as shown in FIG. 4, the system further includes a first conference server 240, and the first client 210 sends the first video stream and the first audio stream which are acquired to the cloud server 230 through the first conference server 240. The cloud server 230 sends the second video stream and the second audio stream to the first client 210 through the first conference server 240.

The network conference convergence system provided in the embodiment of the present disclosure includes the first client, the second client, and the cloud server. The first client is installed with the first conference application and the cloud conference application. The second client is installed with the cloud conference application. The cloud server is installed with the first conference application. The first client creates or enters the first virtual conference through the first conference application. The first client sends the first join request to the cloud server through the cloud conference application. The cloud server joins the first virtual conference through the first conference application according to the first join request. The second client joins the first virtual conference through the cloud conference application. The first client and the second client transmit the data through the cloud server. The second client implements conference interoperation with the first client through the installation of the cloud conference application so that the data transmission between the first client and the second client is implemented, which can implement the interconnection and interoperation between different conference software. Thus, when users using different video conference software hold a conference with each other, the users quickly access each other's video conference software so that the convenience of a network conference is improved for the users.

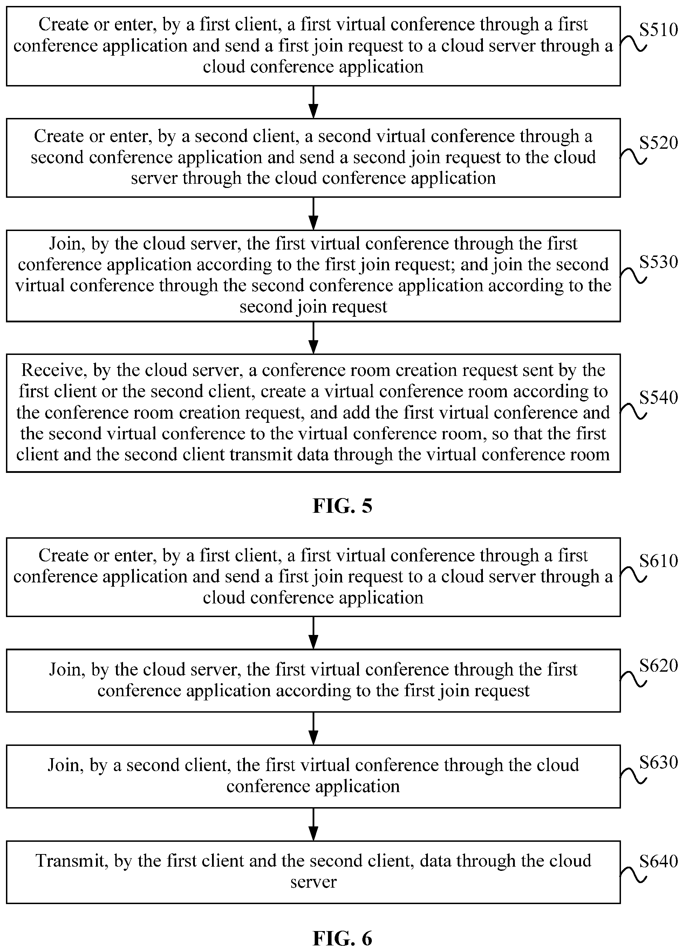

FIG. 5 is a flowchart of a network conference convergence method according to an embodiment of the present disclosure. The method is performed by the network conference convergence system described in the preceding embodiment. As shown in FIG. 5, the method includes the steps described below.

In step 510, a first virtual conference is created or entered through a first conference application by a first client and a first join request is sent to a cloud server through a cloud conference application.

In step 520, a second virtual conference is created or entered through a second conference application by a second client and a second join request is sent to the cloud server through the cloud conference application.

In step 530, the first virtual conference is joined through the first conference application by the cloud server according to the first join request; and the second virtual conference is joined through the second conference application by the cloud server according to the second join request.

In step 540, a conference room creation request sent by the first client or the second client is received by the cloud server, a virtual conference room is created according to the conference room creation request, and the first virtual conference and the second virtual conference are added to the virtual conference room, so that the first client and the second client transmit data through the virtual conference room.

Optionally, the process in which the first client and the second client transmit the data through the virtual conference room may be as follows: the first client sends a first video stream and a first audio stream which are acquired to the first virtual conference of the cloud server through a first conference server; the first video stream is sent by the first virtual conference to the second virtual conference through a virtual camera channel, and the first audio stream is forwarded by the first virtual conference to the second virtual conference through a virtual microphone channel; and the first video stream and the first audio stream are sent by the second virtual conference to the second client through a second conference server.

The second client sends a second video stream and a second audio stream which are acquired to the second virtual conference of the cloud server through a second conference server, the second video stream is sent by the second virtual conference to the first virtual conference through the virtual camera channel, and the second audio stream is forwarded by the second virtual conference to the first virtual conference through the virtual microphone channel; and the second video stream and the second audio stream are sent by the first virtual conference to the first client through the first conference server.

FIG. 6 is a flowchart of another network conference convergence method according to an embodiment of the present disclosure. The method is performed by the network conference convergence system described in the preceding embodiment. As shown in FIG. 6, the method includes the steps described below.

In step 610, a first virtual conference is created or entered through a first conference application by a first client and a first join request is sent to a cloud server through a cloud conference application.

In step 620, the first virtual conference is joined through the first conference application by the cloud server according to the first join request.

In step 630, the first virtual conference is joined through the cloud conference application by a second client.

In step 640, the first client and the second client transmit data through the cloud server.

The process in which the first client and the second client transmit the data through the cloud server may be as follows: the first client sends a first video stream and a first audio stream which are acquired to the cloud server through a first conference server; and the cloud server sends the first video stream and the first audio stream to the second client.

The second client sends a second video stream and a second audio stream which are acquired to the cloud server; and the cloud server sends the second video stream and the second audio stream to the first client through the first conference server.

## Claims

1. A convergence system for network conference, the convergence system for network conference being able to implement interconnection and interoperation between different conference software, comprising: a first client (110), a second client (120), and a cloud server (130);
**characterized in that**, the first client (110) is installed with a first conference application and a cloud conference application, the second client (120) is installed with a second conference application and the cloud conference application, and the cloud server (130) is installed with the first conference application and the second conference application;
wherein the first conference application is different from the second conference application;
wherein the first client (110) is configured to create or enter a first virtual conference through the first conference application and send a first join request to the cloud server through the cloud conference application, and the cloud server (130) is configured to join the first virtual conference through the first conference application according to the first join request;
wherein the second client (120) is configured to create or enter a second virtual conference through the second conference application and send a second join request to the cloud server (130) through the cloud conference application, and the cloud server (130) is further configured to join the second virtual conference through the second conference application according to the second join request;
wherein the cloud server (130) is further configured to receive a conference room creation request sent by the first client or the second client, create a virtual conference room according to the conference room creation request, and add the first virtual conference and the second virtual conference to the virtual conference room; and
wherein the first client (110) and the second client (120) are further configured to transmit data through the virtual conference room.

2. The system according to claim 1, wherein the first client (110) and the second client (120) are configured to transmit the data through the virtual conference room in a following manner:
the first client (110) is configured to send a first video stream and a first audio stream which are acquired to the first virtual conference of the cloud server (130), the first virtual conference is used for forwarding the first video stream and the first audio stream to the second virtual conference, and the second virtual conference is used for sending the first video stream and the first audio stream to the second client; and
the second client (120) is configured to send a second video stream and a second audio stream which are acquired to the second virtual conference of the cloud server (130), the second virtual conference is further used for forwarding the second video stream and the second audio stream to the first virtual conference, and the first virtual conference is also used for sending the second video stream and the second audio stream to the first client (110).

3. The system according to claim 2, wherein the first virtual conference is used for sending the first video stream to the second virtual conference through a virtual camera channel and forwarding the first audio stream to the second virtual conference through a virtual microphone channel; and
wherein the second virtual conference is used for sending the second video stream to the first virtual conference through the virtual camera channel and forwarding the second audio stream to the first virtual conference through the virtual microphone channel.

4. The system according to claim 2, further comprising: a first conference server (140) and a second conference server (150);
wherein the first client (110) and the second client (120) are configured to transmit the data through the virtual conference room in a following manner:
the first client (110) is configured to send the first video stream and first audio stream which are acquired to the first virtual conference of the cloud server (130) through the first conference server (140), and the first virtual conference is used for sending, through the first conference server (140), the second video stream and the second audio stream acquired by the second client (120) to the first client (110); and
the second client (120) is configured to send the second video stream and the second audio stream which are acquired to the second virtual conference of the cloud server (130) through the second conference server (150), and the second virtual conference is used for sending the first video stream and the first audio stream to the second client (120) through the second conference server (150).

5. The system according to claim 1, further comprising: a third client (160) installed with the cloud conference application;
wherein the third client (160) is configured to join the first virtual conference or the second virtual conference through the cloud conference application; and
wherein the first client (110), the second client (120), and the third client (160) are further configured to transmit the data through the virtual conference room.

6. The system according to any one of claims 1 to 5, wherein the cloud conference application is implemented through one of a web page, a software plug-in, a script, or an application.

7. A convergence method for network conference performed by the system according to any one of claims 1 to 6, the convergence system for network conference being able to implement interconnection and interoperation between different conference software, comprising:
creating or entering (S510), by a first client, a first virtual conference through a first conference application and sending a first join request to a cloud server through a cloud conference application;
creating or entering (S520), by a second client, a second virtual conference through a second conference application and sending a second join request to the cloud server through the cloud conference application;
joining (S530), by the cloud server, the first virtual conference through the first conference application according to the first join request; and joining the second virtual conference through the second conference application according to the second join request; and
receiving (S530), by the cloud server, a conference room creation request sent by the first client or the second client, creating a virtual conference room according to the conference room creation request, and adding the first virtual conference and the second virtual conference to the virtual conference room, so that the first client and the second client transmit data through the virtual conference room;
wherein the first conference application is different from the second conference application.

## Patentansprüche

1. Konvergenzsystem für Netzwerkkonferenzen, wobei das Konvergenzsystem für Netzwerkkonferenzen in der Lage ist, Zusammenschaltung und Zusammenwirkung zwischen unterschiedlicher Konferenzsoftware zu implementieren, umfassend: einen ersten Client (110), einen zweiten Client (120) und einen Cloud-Server (130);
**dadurch gekennzeichnet, dass** der erste Client (110) mit einer ersten Konferenzanwendung und einer Cloud-Konferenzanwendung installiert wird, der zweite Client (120) mit einer zweiten Konferenzanwendung und der Cloud-Konferenzanwendung installiert wird, und der Cloud-Server (130) mit der ersten Konferenzanwendung und der zweiten Konferenzanwendung installiert wird;
wobei die erste Konferenzanwendung unterschiedlich von der zweiten Konferenzanwendung ist;
wobei der erste Client (110) dazu konfiguriert ist, über die erste Konferenzanwendung eine erste virtuelle Konferenz zu erstellen oder einer solchen beizutreten und über die Cloud-Konferenzanwendung eine erste Beitrittsanfrage an den Cloud-Server zu senden, und der Cloud-Server (130) dazu konfiguriert ist, entsprechend der ersten Beitrittsanfrage der ersten virtuellen Konferenz über die erste Konferenzanwendung beizutreten;
wobei der zweite Client (120) dazu konfiguriert ist, über die zweite Konferenzanwendung eine zweite virtuelle Konferenz zu erstellen oder einer solchen beizutreten und über die Cloud-Konferenzanwendung eine zweite Beitrittsanfrage an den Cloud-Server (130) zu senden, und der Cloud-Server (130) weiter dazu konfiguriert ist, entsprechend der zweiten Beitrittsanfrage der zweiten virtuellen Konferenz über die zweite Konferenzanwendung beizutreten;
wobei der Cloud-Server (130) weiter dazu konfiguriert ist, eine von dem ersten Client oder von dem zweiten Client gesendete Anfrage zur Erstellung eines Konferenzraums zu empfangen, einen virtuellen Konferenzraum entsprechend der Anfrage zur Erstellung eines Konferenzraums zu erstellen und die erste virtuelle Konferenz und die zweite virtuelle Konferenz zu dem virtuellen Konferenzraum hinzuzufügen; und
wobei der erste Client (110) und der zweite Client (120) weiter dazu konfiguriert sind, Daten durch den virtuellen Konferenzraum zu übertragen.

2. System nach Anspruch 1, wobei der erste Client (110) und der zweite Client (120) dazu konfiguriert sind, die Daten auf eine folgende Art durch den virtuellen Konferenzraum zu übertragen:
der erste Client (110) ist dazu konfiguriert, einen ersten Videostream und einen ersten Audiostream, die erfasst werden, an die erste virtuelle Konferenz des Cloud-Servers (130) zu senden, die erste virtuelle Konferenz wird zum Weiterleiten des ersten Videostreams und des ersten Audiostreams an die zweite virtuelle Konferenz verwendet, und die zweite virtuelle Konferenz wird zum Senden des ersten Videostreams und des ersten Audiostreams an den zweiten Client verwendet; und
der zweite Client (120) ist dazu konfiguriert, einen zweiten Videostream und einen zweiten Audiostream, die erfasst werden, an die zweite virtuelle Konferenz des Cloud-Servers (130) zu senden, die zweite virtuelle Konferenz wird weiter zum Weiterleiten des zweiten Videostreams und des zweiten Audiostreams an die erste virtuelle Konferenz verwendet, und die erste virtuelle Konferenz wird auch zum Senden des zweiten Videostreams und des zweiten Audiostreams an den ersten Client (110) verwendet.

3. System nach Anspruch 2, wobei die erste virtuelle Konferenz zum Senden des ersten Videostreams über einen virtuellen Kamerakanal an die zweite virtuelle Konferenz und Weiterleiten des ersten Audiostreams über einen virtuellen Mikrofonkanal an die zweite virtuelle Konferenz verwendet wird; und
wobei die zweite virtuelle Konferenz zum Senden des zweiten Videostreams über den virtuellen Kamerakanal an die erste virtuelle Konferenz und Weiterleiten des zweiten Audiostreams über den virtuellen Mikrofonkanal an die erste virtuelle Konferenz verwendet wird.

4. System nach Anspruch 2, weiter umfassend: einen ersten Konferenzserver (140) und einen zweiten Konferenzserver (150);
wobei der erste Client (110) und der zweite Client (120) dazu konfiguriert sind, die Daten auf eine folgende Art durch den virtuellen Konferenzraum zu übertragen:
der erste Client (110) ist dazu konfiguriert, den ersten Videostream und den ersten Audiostream, die erfasst werden, über den ersten Konferenzserver (140) an die erste virtuelle Konferenz des Cloud-Servers (130) zu senden, und die erste virtuelle Konferenz wird zum Senden des zweiten Videostreams und des zweiten Audiostreams, die von dem zweiten Client (120) erfasst werden, über den ersten Konferenzserver (140) an den ersten Client (110) verwendet; und
der zweite Client (120) ist dazu konfiguriert, den zweiten Videostream und den zweiten Audiostream, die erfasst werden, über den zweiten Konferenzserver (150) an die zweite virtuelle Konferenz des Cloud-Servers (130) zu senden, und die zweite virtuelle Konferenz wird zum Senden des ersten Videostreams und des ersten Audiostreams über den zweiten Konferenzserver (150) an den zweiten Client (120) verwendet.

5. System nach Anspruch 1, weiter umfassend: einen dritten Client (160), der mit der Cloud-Konferenzanwendung installiert wird;
wobei der dritte Client (160) dazu konfiguriert ist, über die Cloud-Konferenzanwendung der ersten virtuellen Konferenz oder der zweiten virtuellen Konferenz beizutreten; und
wobei der erste Client (110), der zweite Client (120) und der dritte Client (160) weiter dazu konfiguriert sind, die Daten über den virtuellen Konferenzraum zu übertragen.

6. System nach einem der Ansprüche 1 bis 5, wobei die Cloud-Konferenzanwendung über eine Webseite, ein Software-Plug-In, ein Skript oder eine Anwendung implementiert wird.

7. Konvergenzverfahren für Netzwerkkonferenzen, das durch das System nach einem der Ansprüche 1 bis 6 ausgeführt wird, wobei das Konvergenzsystem für Netzwerkkonferenzen in der Lage ist, Zusammenschaltung und Zusammenwirkung zwischen unterschiedlicher Konferenzsoftware zu implementieren, umfassend:
Erstellen oder Beitreten zu (S510) einer ersten virtuellen Konferenz durch einen ersten Client über eine erste Konferenzanwendung und Senden einer ersten Beitrittsanfrage an einen Cloud-Server über eine Cloud-Konferenzanwendung;
Erstellen oder Beitreten zu (S520) einer zweiten virtuellen Konferenz durch einen zweiten Client über eine zweite Konferenzanwendung und Senden einer zweiten Beitrittsanfrage an den Cloud-Server über eine Cloud-Konferenzanwendung;
Beitreten (S530) zu der ersten virtuellen Konferenz durch den Cloud-Server über die erste Konferenzanwendung entsprechend der ersten Beitrittsanfrage; und Beitreten zu der zweiten virtuellen Konferenz über die zweite Konferenzanwendung entsprechend der zweiten Beitrittsanfrage; und
Empfangen (S530) einer von dem ersten Client oder von dem zweiten Client gesendeten Anfrage zur Erstellung eines Konferenzraums durch den Cloud-Server, Erstellen eines virtuellen Konferenzraums entsprechend der Anfrage zur Erstellung eines Konferenzraums und Hinzufügen der ersten virtuellen Konferenz und der zweiten virtuellen Konferenz zu dem virtuellen Konferenzraum, sodass der erste Client und der zweite Client Daten über den virtuellen Konferenzraum übertragen;
wobei die erste Konferenzanwendung unterschiedlich von der zweiten Konferenzanwendung ist.

## Revendications

1. Système de convergence pour conférence en réseau, le système de convergence pour conférence en réseau étant apte à mettre en œuvre une interconnexion et une interopérabilité entre différents logiciels de conférence, comprenant : un premier client (110), un deuxième client (120) et un serveur cloud (130) ;
**caractérisé en ce que** le premier client (110) est installé avec une première application de conférence et une application de conférence cloud, le deuxième client (120) est installé avec une seconde application de conférence et l'application de conférence cloud, et le serveur cloud (130) est installé avec la première application de conférence et la seconde application de conférence ;
dans lequel la première application de conférence est différente de la seconde application de conférence ;
dans lequel le premier client (110) est configuré pour créer ou entrer dans une première conférence virtuelle par le biais de la première application de conférence et envoyer une première demande de participation au serveur cloud par le biais de l'application de conférence cloud, et le serveur cloud (130) est configuré pour rejoindre la première conférence virtuelle par le biais de la première application de conférence en fonction de la première demande de participation ;
dans lequel le deuxième client (120) est configuré pour créer ou entrer dans une seconde conférence virtuelle par le biais de la seconde application de conférence et envoyer une seconde demande de participation au serveur cloud (130) par le biais de l'application de conférence cloud, et le serveur cloud (130) est en outre configuré pour rejoindre la seconde conférence virtuelle par le biais de la seconde application de conférence en fonction de la seconde demande de participation ;
dans lequel le serveur cloud (130) est en outre configuré pour recevoir une demande de création de salle de conférence envoyée par le premier client ou le deuxième client, créer une salle de conférence virtuelle en fonction de la demande de création de salle de conférence, et ajouter la première conférence virtuelle et la seconde conférence virtuelle à la salle de conférence virtuelle ; et
dans lequel le premier client (110) et le deuxième client (120) sont en outre configurés pour transmettre des données par le biais de la salle de conférence virtuelle.

2. Système selon la revendication 1, dans lequel le premier client (110) et le deuxième client (120) sont configurés pour transmettre les données par le biais de la salle de conférence virtuelle de la manière suivante :
le premier client (110) est configuré pour envoyer un premier flux vidéo et un premier flux audio qui sont acquis à la première conférence virtuelle du serveur cloud (130), la première conférence virtuelle est utilisée pour transférer le premier flux vidéo et le premier flux audio à la seconde conférence virtuelle, et la seconde conférence virtuelle est utilisée pour envoyer le premier flux vidéo et le premier flux audio au deuxième client ; et
le deuxième client (120) est configuré pour envoyer un second flux vidéo et un second flux audio qui sont acquis à la seconde conférence virtuelle du serveur cloud (130), la seconde conférence virtuelle est en outre utilisée pour transférer le second flux vidéo et le second flux audio à la première conférence virtuelle, et la première conférence virtuelle est également utilisée pour envoyer le second flux vidéo et le second flux audio au premier client (110).

3. Système selon la revendication 2, dans lequel la première conférence virtuelle est utilisée pour envoyer le premier flux vidéo à la seconde conférence virtuelle par le biais d'un canal de caméra virtuelle et pour transférer le premier flux audio à la seconde conférence virtuelle par le biais d'un canal de microphone virtuel ; et
dans lequel la seconde conférence virtuelle est utilisée pour envoyer le second flux vidéo à la première conférence virtuelle par le biais du canal de caméra virtuelle et transférer le second flux audio à la première conférence virtuelle par le biais du canal de microphone virtuel.

4. Système selon la revendication 2, comprenant en outre : un premier serveur de conférence (140) et un second serveur de conférence (150) ;
dans lequel le premier client (110) et le deuxième client (120) sont configurés pour transmettre les données par le biais de la salle de conférence virtuelle de la manière suivante :
le premier client (110) est configuré pour envoyer le premier flux vidéo et le premier flux audio qui sont acquis à la première conférence virtuelle du serveur cloud (130) par le biais du premier serveur de conférence (140), et la première conférence virtuelle est utilisée pour envoyer, par le biais du premier serveur de conférence (140), le second flux vidéo et le second flux audio acquis par le deuxième client (120) au premier client (110) ; et
le deuxième client (120) est configuré pour envoyer le second flux vidéo et le second flux audio qui sont acquis à la seconde conférence virtuelle du serveur cloud (130) par le biais du second serveur de conférence (150), et la seconde conférence virtuelle est utilisée pour envoyer le premier flux vidéo et le premier flux audio au deuxième client (120) via le second serveur de conférence (150).

5. Système selon la revendication 1, comprenant en outre : un troisième client (160) installé avec l'application de conférence cloud ;
dans lequel le troisième client (160) est configuré pour rejoindre la première conférence virtuelle ou la seconde conférence virtuelle par le biais de l'application de conférence cloud ; et
dans lequel le premier client (110), le deuxième client (120) et le troisième client (160) sont en outre configurés pour transmettre les données par le biais de la salle de conférence virtuelle.

6. Système selon l'une quelconque des revendications 1 à 5, dans lequel l'application de conférence cloud est mise en œuvre par l'intermédiaire d'une page Web, d'un plug-in logiciel, d'un script ou d'une application.

7. Procédé de convergence pour conférence en réseau réalisé par le système selon l'une quelconque des revendications 1 à 6, le système de convergence pour conférence en réseau étant apte à mettre en œuvre une interconnexion et une interopérabilité entre différents logiciels de conférence, comprenant :
la création ou l'entrée (S510), par un premier client, dans une première conférence virtuelle par le biais d'une première application de conférence et l'envoi d'une première demande de participation à un serveur cloud par le biais d'une application de conférence cloud ;
la création ou l'entrée (S520), par un deuxième client, dans une seconde conférence virtuelle par le biais d'une seconde application de conférence et l'envoi d'une seconde demande de participation au serveur cloud par le biais de l'application de conférence cloud ;
le fait de rejoindre (S530), par le serveur cloud, la première conférence virtuelle par le biais de la première application de conférence conformément à la première demande de participation ; et rejoindre la seconde conférence virtuelle par le biais de la seconde application de conférence en fonction de la seconde demande de participation ; et
la réception (S530), par le serveur cloud, d'une demande de création de salle de conférence envoyée par le premier client ou le deuxième client, la création d'une salle de conférence virtuelle en fonction de la demande de création de salle de conférence, et l'ajout de la première conférence virtuelle et la seconde conférence virtuelle à la salle de conférence virtuelle, de sorte que le premier client et le deuxième client transmettent des données par le biais de la salle de conférence virtuelle ;
dans lequel la première application de conférence est différente de la seconde application de conférence.
